(19)

Europäisches
Patentamt
European
Patent Office
Office européen
des brevets

(11)  **EP 4 282 571 B1**

(12)  **EUROPEAN PATENT SPECIFICATION**

(45) Date of publication and mention
of the grant of the patent:
**08.04.2026  Bulletin 2026/15**

(21) Application number: **22763045.6**

(22) Date of filing: **22.02.2022**

(51) International Patent Classification (IPC):
**B23K 1/005** $^{(2006.01)}$  **B23K 26/21** $^{(2014.01)}$
**B23K 103/20** $^{(2006.01)}$  **B23K 1/20** $^{(2006.01)}$
**B23K 1/19** $^{(2006.01)}$  **B23K 101/34** $^{(2006.01)}$
**B23K 103/10** $^{(2006.01)}$

(52) Cooperative Patent Classification (CPC):
**B23K 1/0056; B23K 1/20;** B23K 1/19;
B23K 2101/34; B23K 2103/10; B23K 2103/20

(86) International application number:
**PCT/JP2022/007115**

(87) International publication number:
**WO 2022/185989 (09.09.2022 Gazette 2022/36)**

(54) **LASER BRAZING METHOD**

LASERLÖTVERBINDUNGSVERFAHREN

PROCÉDÉ D'ASSEMBLAGE PAR BRASAGE AU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.03.2021  JP 2021033677**

(43) Date of publication of application:
**29.11.2023  Bulletin 2023/48**

(73) Proprietor: **JFE Steel Corporation
Tokyo 100-0011 (JP)**

(72) Inventors:
• **TANIGUCHI, Koichi
Tokyo 100-0011 (JP)**
• **OKITA, Yasuaki
Tokyo 100-0011 (JP)**

• **SAWANISHI, Chikaumi
Tokyo 100-0011 (JP)**
• **MATSUDA, Hiroshi
Tokyo 100-0011 (JP)**
• **YAMAMOTO, Motomichi
Higashi-Hiroshima City, Hiroshima 739-8511 (JP)**

(74) Representative: **Hoffmann Eitle
Patent- und Rechtsanwälte PartmbB
Arabellastraße 30
81925 München (DE)**

(56) References cited:
CN-A- 110 899 882    DE-A1- 102018 001 460
JP-A- 2002 079 371    JP-A- 2007 152 381
JP-A- 2008 000 814    JP-A- 2008 119 750
JP-B2- 5 855 470      JP-B2- 6 031 370

EP 4 282 571 B1

# EP 4 282 571 B1

## Description

Technical Field

The present invention relates to a laser brazing method for brazing a steel sheet and an aluminum-based sheet material together through laser beam irradiation. Specifically, the present invention relates to a laser brazing method for producing a flared joint (see, for example, JP5855470 B2) or a lap joint (see, for example, CN110899882 A) by feeding an electrically-heated aluminum-based filler wire (a brazing material) to the meeting portion of the steel sheet and the aluminum-based sheet material and then irradiating the brazing material with a laser beam to melt it.

Background Art

In recent years, an aluminum-based sheet material has been increasingly applied to part of a vehicle body panel with a view to reducing the weight of an automobile vehicle body. When partly using an aluminum-based sheet material, it is inevitably necessary to join the aluminum-based sheet material to the other member, such as a steel sheet member, for example. However, when steel and an aluminum-based sheet material are joined together through fusion, problems would arise such that an iron-aluminum-based brittle intermetallic compound is produced, resulting in a lower joining strength. Thus, there has been proposed a so-called laser brazing method that includes feeding a filler material (a brazing material) to a gap between steel and an aluminum-based sheet material, and then irradiating the brazing material with a laser beam, thereby heating and melting the brazing material to braze the steel and the aluminum-based sheet material together.

For example, Patent Literature 1 discloses a laser brazing method that includes using, as a heat source for melting a brazing material, a laser beam with a finely controllable heat input amount, irradiating a work point (a joining point) with the laser beam, and then feeding a filler wire to the work point while controlling the feed amount of the wire so that the wetting length of the molten wire and a workpiece (base metal) becomes greater than or equal to a predetermined amount, and a visually apparent bump is not generated, thereby securing the strength of a joint.

Patent Literature 2 discloses a laser brazing method for performing lap fillet joining of an alloyed hot-dip galvanized steel sheet and an aluminum-based sheet material using a pair of preceding and following laser beams arranged in the joining direction, in which prior to laser brazing, a to-be-joined portion of the galvanized steel sheet is irradiated with the preceding laser beam so that the coating layer is removed, and immediately after that, the portion after the removal of the coating layer is irradiated with the following laser beam, and a brazing material fed to such a portion is melted, whereby the necessary and sufficient joining strength is obtained.

Patent Literature 3 discloses a method for joining a steel sheet and an aluminum-based sheet material together using laser beams, in which a preceding beam located on the front side in the traveling direction of a work point and a following beam located on the rear side in the traveling direction are used, and preheating is performed through irradiation with the preceding beam such that the heat input amount per unit area of the aluminum-based sheet material portion becomes greater than the heat input amount per unit area of the steel sheet, and then, a brazing material is irradiated with the following beam so as to be melted, whereby appearance defects of the resulting joined portion can be suppressed.

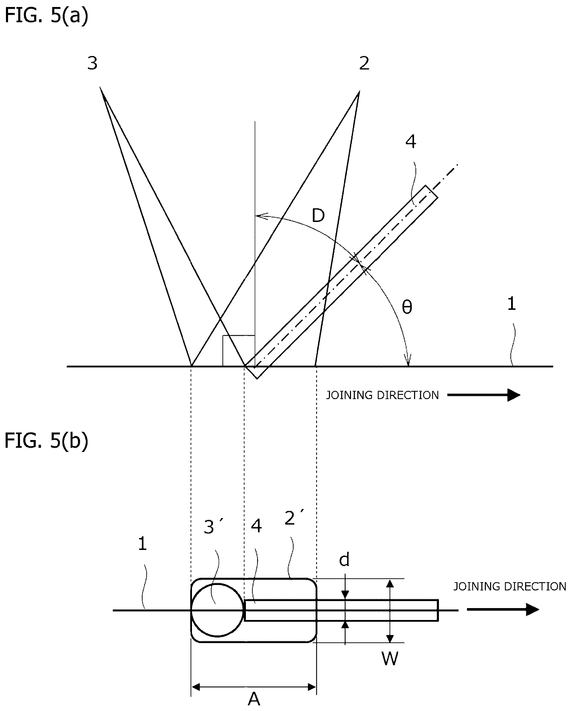

Non-Patent Literature 1 discloses a technology for joining steel and aluminum, which are dissimilar materials, in which two high-power semiconductor laser irradiation apparatuses is arranged behind an electrically-heated flux-cored wire (FCW) at the head, the irradiation region of the preceding laser beam is a rectangular spot with a view to performing stable melting and grooving at the tip end portion of the wire, the irradiation region of the following laser beam is a circular spot with a view to achieving stable formation of a molten pool and stable melting of the wire, and irradiation is performed with a combination of the two laser beam spots as illustrated in FIG. 5. According to such a method, it is possible to join three types of steel sheets, a hot-dip galvanized (GI) steel sheet, an alloyed hot-dip galvanized (GA) steel sheet, and a cold-rolled steel sheet (CR) without a coating layer, to a A5052 Al alloy steel at a joining speed of up to 9 m/min with a laser power of 5 kW, and a joining speed of up to 6 m/min with a laser power of 4 kW, without causing defects.

Citation List

Patent Literature

Patent Literature 1: JP-2003-225784A
Patent Literature 2: JP-2007-075872A
Patent Literature 3: JP-2013-14673A
Patent Literature 4: JP5855470B2
Patent Literature 5: CN110899882A

Non-Patent Literature

Non-Patent Literature 1: Takano, Yamamoto, Shinozaki, Okita, Sawanishi, and Matsuda, " High-speed Hot-wire Laser Brazing for Dissimilar Flare Joint of Steel / Aluminum Alloy-Development of Hot-wire Laser Brazing Technology for Steel / Aluminum Alloy Dissimilar Joint (6th Report) -," Preprints of the National Meeting of the Japan Welding Society. Vol. 107 (2020-9), G-1-4

Summary of Invention

Technical Problem

However, the laser brazing method disclosed in Patent Literature 1 uses only one laser beam for joining. Therefore, to form a brazing bead with an excellent appearance, it is necessary to melt a filler wire with a single laser beam and further assimilate the molten wire into the base metal. However, since the wettability between the molten filler wire and the base metal is greatly influenced by the heated state of the base metal, it is necessary to strictly adjust the laser beam irradiation position and focal position. Thus, when high-speed joining is performed, in particular, it would be difficult to achieve both an excellent appearance of the joint and the necessary joint strength, which is problematic.
The laser brazing method disclosed in Patent Literature 2 is a technique for performing, after removing the galvanized layer on the steel sheet with the preceding laser beam, brazing by melting a filler wire with the following laser beam. In this method, it is necessary to set the width of the coating layer removed with the preceding laser beam to be greater than the width of brazing. However, when the laser beam is defocused to irradiate a wide range, it is necessary to increase the irradiation energy of the laser beam, making it difficult to perform high-speed joining, which is problematic.
The laser brazing method disclosed in Patent Literature 3 can suppress appearance defects of a bead. However, since a filler wire is melted with only the following laser beam, it may be difficult to, when the wettability between the molten filler wire and the base metal is insufficient and also when the filler wire cannot be fed to a position deep inside the butted portion, sufficiently secure the necessary wet length and thus obtain a high joint strength, which is problematic.
The laser brazing method disclosed in Non-Patent Literature 1 is capable of performing high-speed joining. However, since laser beams are emitted from above, as illustrated in FIG. 5, the feed direction of the filler wire is limited and the feed angle $\theta$ of the filler wire thus becomes small. Thus, to efficiently put the wire metal into the gap between the materials (the butted portion), it is necessary to increase the temperature of the electrically-heated filler wire. In addition, since the wire is overlaid on the materials, and laser beams are emitted thereto from above, part of heat input by the laser is used to heat the wire. Thus, to heat the wire to a sufficient temperature, it is necessary to use a high-power laser, which is problematic.
The present invention has been developed in view of the foregoing problems of the conventional technologies, and it is an object of the present invention to provide a laser brazing method capable of producing a flared joint or a lap joint including a steel sheet and an aluminum-based sheet material with an excellent joining strength and without causing appearance defects of a bead.

Solution to Problem

To solve the foregoing problems, the inventors have conducted concentrated studies by focusing on the joining method for a flared joint disclosed in Non-Patent Literature 1 described above. Consequently, the inventors have considered that when the feed angle $\theta$ of the filler wire fed to the joined portion is small in the foregoing method, there is a limitation to efficiently feed the filler wire to the gap between the members (the butted portion) of the flared joint, and thus have further conducted concentrated studies on the means for solving such a problem. Consequently, the inventors have arrived at setting the feed angle of the wire to be substantially perpendicular to the joining direction unlike in Non-Patent Literature 1. Accordingly, the filler wire can be efficiently inserted into the gap between the butted portion to allow high-speed joining, and also, limitation on the laser beam irradiation positions is expected to be eased. Meanwhile, it has been clarified that if the feed angle of the filler wire is set larger to be substantially perpendicular to the joining direction, the molten metal may become spherical in shape, and the appearance of the resulting bead may thus be spoiled, which may possibly cause joining defects in some cases.
Therefore, the inventors have further conducted concentrated studies on the conditions under which the joined portion can be stably formed without causing joining defects even when the filler wire is fed substantially perpendicularly to the joined portion. Consequently, the inventors have found that it is effective, in the case of a flared joint, to feed the filler wire with a tilt in the range of $0° \leq D \leq 19°$ to the front side or the rear side in the joining direction with respect to a line that is the center line passing through the groove center of the flared joint and that is perpendicular to the joining direction. The inventors have also conducted studies on a simple lap joint, and have also found that, as with the flared joint, it is effective to feed the filler wire with a tilt in the range of $0° \leq D \leq 19°$ to the front side or the rear side in the joining direction with respect to a line that is perpendicular to the lower steel surface of the lap joint, thus completing the present invention.

The present invention based on the foregoing findings proposes a laser brazing method for a flared joint including a steel sheet and an aluminum-based sheet material, characterized in that a preceding laser beam is irradiated ahead of a joining position (a joining point) of the steel sheet and the aluminum-based sheet material in a joining direction to preheat a position to be joined, an electrically-heated aluminum-based filler wire is fed to the joining position (the joining point), a following laser beam is irradiated behind the filler wire so that the filler wire is melted to perform brazing, wherein the filler wire is fed with a tilt in the range of $0° \leq D \leq 19°$ to a front side or a rear side in the joining direction with respect to a line that is a center line passing through a groove center of the flared joint and that is perpendicular to the joining direction.

The present invention also proposes a laser brazing method for a lap joint including a steel sheet and an aluminum-based sheet material, characterized in that a preceding laser beam is irradiated ahead of a joining position (a joining point) of the steel sheet and the aluminum-based sheet material in a joining direction to preheat a position to be joined, an electrically-heated aluminum-based filler wire is fed to the joining position (the joining point), a following laser beam is irradiated behind the filler wire so that the filler wire is melted to perform brazing, wherein the filler wire is fed with a tilt in the range of $0° \leq D \leq 19°$ to a front side or a rear side in the joining direction with respect to a line that is perpendicular to a lower steel surface of the lap joint.

The laser brazing method of the present invention is characterized in that a distance L between a rear end of an irradiation range of the preceding laser beam and a rear end of the filler wire is in the range satisfying a following expression (1):

$$0 \leq L \leq 4 \times d \ ...(1),$$

where d is a diameter of the filler wire.

The laser brazing method of the present invention is characterized in that a width W of an irradiation range of the preceding laser beam in a direction orthogonal to the joining direction is in the range satisfying a following expression (2):

$$0.5 \times T \leq W \leq 3 \times T \ ...(2),$$

where T is a sum of steel thicknesses of the steel sheet and the aluminum-based sheet material.

The laser brazing method of the present invention is characterized in that an irradiation range of the preceding laser beam is rectangular, and a length A of the irradiation range of the laser beam in the joining direction is in the range satisfying a following expression (3):

$$W \leq A \leq 10 \times W \ ...(3),$$

where W is a width of the irradiation range.

The steel sheet for which the laser brazing method of the present invention is characterized to be a steel sheet coated with flux.

The filler wire used for the laser brazing method of the present invention is characterized to be a flux-cored wire.

The preceding laser beam used for the laser brazing method of the present invention is characterized to be a solid-state laser.

The laser brazing method of the present invention is characterized in that the steel sheet has a coating layer containing zinc as a main component and the brazing is performed in a state where the coating layer is melted with the preceding laser beam.

The laser brazing method of the present invention is characterized in that a temperature $T_f(K)$ of the electrically-heated filler wire is in the range satisfying a following expression (4):

$$0.5 \times T_m \leq T_f \leq T_m \ ...(4),$$

where $T_m(K)$ is a melting point of the filler wire.

The laser brazing method of the present invention is characterized in that a distance $L_B$ between a front end of the filler wire and a rear end of an irradiation range of the following laser beam is in the range satisfying a following expression (5):

$$0 \leq L_B \leq 3 \times d \ ...(5),$$

where d is a diameter of the filler wire.

Advantageous Effects of Invention

According to the present invention, when a flared joint or a lap joint of a steel sheet and an aluminum-based sheet material is produced through brazing using laser beams, irradiation is performed with laser beams in two directions on the front and rear sides of the joining position in the joining direction. Specifically, the necessary width of the position to be joined is preheated with the preceding laser beam, and then, an electrically-heated filler wire is fed to the joining position. Thus, it is possible to melt the filler wire fed to the joining position without directly irradiating the filler wire being fed with the following laser beam, and further perform high-speed brazing. In this manner, in the present invention, the filler wire fed to the joining position is heated and melted by irradiating a laser beam from behind so that the joined portion is formed. In addition, in the present invention, the feed angle of the filler wire is optimized so that the filler wire can be fed to a portion deep inside the gap between the butted portion of the flared joint or the lap joint. Thus, a joint with an excellent appearance and high strength can be stably obtained. Further, in the present invention, the distance between the irradiation range of the preceding laser beam and the filler wire is set in an appropriate range. Thus, it is possible to heat the position to be joined, which is located ahead of the feed point of the filler wire, to a suitable temperature, and thus increase the wettability of the surface of the base metal of the joint. Thus, a brazing material can be fed to a portion deep inside the gap between the butted portion, and thus, a defectfree joined portion of the brazing material and the metals as the base metals can be formed. Furthermore, in the present invention, the width of the irradiation range of the preceding laser beam in a direction orthogonal to the joining direction is set in an appropriate range for the sum of the steel thicknesses of the steel sheet and the aluminum-based sheet material. Thus, excellent wettability can be secured. Moreover, in the present invention, the irradiation range of the preceding laser beam is set rectangular such that the length of the irradiation range in the joining direction is longer than the width thereof. Thus, it is possible to suppress rapid heating with the preceding laser beam, thus prevent peeling of a flux from the flux-coated base metal and increase the wettability between the base metal and the molten wire, and further perform high-speed joining while obtaining a bead with an excellent appearance. In addition, in the present invention, when a flux-cored wire is used as the filler wire, there is no need to coat the base metal with flux in advance, and thus, it is possible to perform high-speed joining while obtaining a bead with an excellent appearance. Further, in the present invention, when a steel sheet having a coating layer of a zinc-based material is used as the base metal, by melting the coating layer with the preceding laser beam and then performing brazing, it is possible to secure the wettability between the base metal and the molten wire without the need to coat the base metal with flux. Thus, it is possible to perform high-speed joining while obtaining a bead with an excellent appearance.

Brief Description of Drawings

FIG. 1 is a view illustrating a laser brazing method of the present invention in which FIG. 1(a) is a side view and FIG. 1(b) is a plan view.

FIG. 2 is a view illustrating the center line of a groove of a flared joint.

FIG. 3 is a view illustrating a flared joint produced in an example.

FIG. 4 is a view illustrating a position where a fracture occurs when a tensile test is performed on the flared joint.

FIG. 5 is a view illustrating a laser brazing method of Non-Patent Literature 1 in which FIG. 5(a) is a side view and FIG. 5(b) is a plan view.

FIG. 6 is a view illustrating a lap joint produced in an example.

FIG. 7 is a view illustrating a position where a fracture occurs when a tensile test is performed on the lap joint.

Description of Embodiments

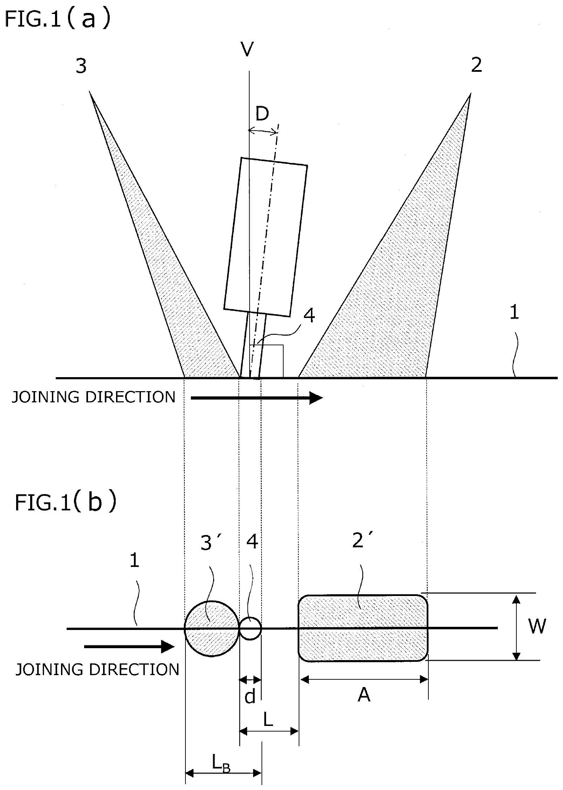

The present invention relates to a technology related to a joining method for a flared joint or a lap joint including a steel sheet and an aluminum-based sheet material, which are dissimilar materials. Specifically, as illustrated in FIG. 1, the present invention relates to a joining technology in which, unlike the joining method of Non-Patent Literature 1 described above (see FIG. 5), a preceding laser beam is irradiated ahead of a joining position (a joining point) of a steel sheet and an aluminum-based sheet material in the joining direction to preheat a position to be joined, an electrically-heated aluminum-based filler wire is fed to the joining position (the joining point), and a following laser beam is irradiated behind the filler wire so that the filler wire is melted and solidified to perform brazing.

What is most important for the joining method of the present invention is that the filler wire is fed with a tilt angle D of $0° \leq D \leq 19°$ to the front side or the rear side in the joining direction, with respect, in the case of a flared joint, to a line that is the center line passing through the groove center of the flared joint and that is perpendicular to the joining direction, and with respect, in the case of a lap joint, to a line that is perpendicular to the lower steel surface of the lap joint.

In the case of the flared joint, by feeding the filler wire with a tilt angle D in the range of $0° \leq D \leq 19°$ to the front side or the rear side in the joining direction with respect to the line (a line V illustrated in FIG. 1) that is the center line passing through the groove center of the flared joint and that is perpendicular to the joining direction, it is possible to efficiently insert the filler wire into the gap between butted portion, and also to melt the filler wire without directly irradiating the filler wire with the following laser beam. Thus, high-speed brazing is possible, and further, a flared joint with an excellent appearance and high fracture strength can be stably obtained. It should be noted that the preferred tilt angle D is in the range of 0 to 15°.

Herein, the center line $C_L$ passing through the groove center of the foregoing flared joint is determined as follows.

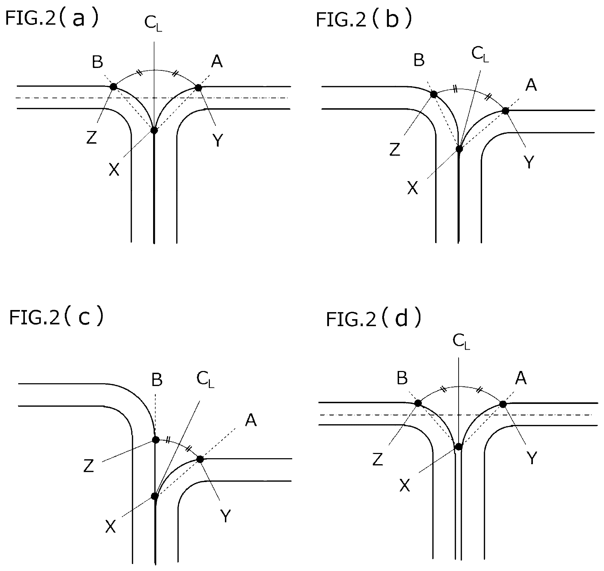

FIG. 2 illustrates a cross-section of the joint before joining is performed. Specifically, FIG. 2(a) illustrates a flared joint when there is no offset between the butted two base metals (there is no gap between the reference faces), and FIGs. 2(b) and 2(c) each illustrate a flared joint when the two base metals are butted with a step therebetween. In each case, provided that X indicates the meeting point between the butted two base metals, Y indicates the end point of the bending of the base metal closer to X between two base metals, and Z indicates a point of the opposite base metal at the same distance from X as the distance X-Y, a bisector of an angle made by a line A passing through X and Y and a line B passing through X and Z is defined as the center line $C_L$ passing through the groove center. It should be noted that, when there is a gap between the two base metals arranged face-to-face, as illustrated in FIG. 2(d), a position where the two base metals are located closest to each other is set as X, and the center line $C_L$ is determined in a similar manner.

In the case of the lap joint, by feeding the filler wire with a tilt angle D in the range of $0° \leq D \leq 19°$ to the front side or the rear side in the joining direction with respect to the line (the line V illustrated in FIG. 1) that is perpendicular to the lower steel surface of the lap joint, it is similarly possible to perform high-speed brazing and further obtain a lap joint with an excellent appearance and high fracture strength. The preferred tilt angle D is in the range of 0 to 15° as with the flared joint.

In the laser brazing method of the present invention, it is preferable, in addition to limiting each of the irradiation positions of the preceding and following laser beams and the tilt angle D of the filler wire to be fed to be in an appropriate range as described above, to set the distance L (see FIG. 1(b)) between the rear end of the irradiation range of the preceding laser beam and the rear end of the filler wire to be in the range defined by a following expression (1), including a case where the preceding laser beam directly irradiates the filler wire:

$$0 \leq L \leq 4 \times d \,...(1),$$

where d is the diameter of the filler wire.

By limiting the distance L between the rear end of the irradiation range of the preceding laser beam and the rear end of the filler wire to be in the range of the expression (1), it is possible to heat a position to be joined, which is located ahead of the feed point of the filler wire, to a suitable temperature, and thus increase the wettability of the surface of the base metal of the joint. Thus, stable welding can be performed. Although the irradiation range of the preceding laser beam and the feed position of the filler wire may overlap, by heating the position to be joined that is slightly ahead of the feed position of the filler wire as described above, it is possible to increase the heating effect based on heat conduction and reduce a loss of the irradiation energy of the laser beam. Meanwhile, if the separation distance L is set too long, it would be impossible to obtain the heating effect. More preferably, L is in the range of $0.1 \times d$ to $2 \times d$.

In the laser brazing method of the present invention, the width W of the irradiation range of the preceding laser beam in a direction orthogonal to the joining direction is preferably in the range defined by a following expression (2):

$$0.5 \times T \leq W \leq 3 \times T \,...(2),$$

where T is the sum of the steel thicknesses of the steel sheet and the aluminum-based sheet material.

In the expression (2), W indicates the heating width for the joined portion that is necessary to secure the wettability of the brazing metal (the brazing material). If W is too narrow, wettability may be insufficient, while if W is too wide, adverse effects, such as a heat loss due to energy dispersion or thermal deformation, may occur. More preferably, the irradiation width W is in the range of $0.7 \times T$ to $2 \times T$. Further preferably, the irradiation width W is in the range of $1 \times T$ to $2 \times T$.

In the laser brazing method of the present invention, it is further preferable that, in addition to satisfying the foregoing conditions, the irradiation range of the foregoing preceding laser beam is rectangular, and the length A of the irradiation range of the foregoing preceding laser beam in the joining direction is in the range satisfying a following expression (3):

$$W \le A \le 10 \times W \;...(3),$$

where W is the width of the irradiation range.

The reason for setting the length A of the irradiation range of the preceding laser beam in the joining direction to be in the foregoing range is that, if the length A is smaller than the width W of the irradiation range, when high-speed joining, in particular, high-speed joining at a rate of 2 m/min or higher, is to be performed, it would be difficult to sufficiently heat the base metal in the steel thickness direction by heating during laser beam irradiation performed in a short time, and this may result in an insufficient temperature rise of the base metal due to a loss of heat by the fed wire, which may lead to deterioration of the appearance of the resulting bead as well as a decrease in joint strength. Meanwhile, if the length A is over 10 times the width W, the heating range becomes too wide, with the result that the metal as the base metal becomes softened, the coating portion other than that of the joined portion evaporates, and a high-power laser would be needed. More preferably, A is in the range of W to $5 \times$ W, and further preferably, A is in the range of W to $4 \times$ W.

The filler wire used in the present invention needs to be electrically-heated before being fed to the joined portion. The temperature $T_f$(K) of the electrically-heated filler wire is preferably in the range satisfying a following expression (4):

$$0.5 \times T_m \le T_f \le T_m \;...(4),$$

where $T_m$(K) is the melting point of the wire metal, though the range differs depending on the joining conditions.

If the temperature $T_f$ of the electrically-heated filler wire is less than $0.5 \times T_m$, poor penetration of the filler wire is likely to occur, while if the temperature $T_f$ is over $T_m$, the filler wire would dissolve before being fed due to an excess heat input. More preferably, $T_f$ is in the range of $0.6 \times T_m$ to $T_m$.

In the laser brazing method of the present invention, the distance $L_B$ (see FIG. 1(b)) between the front end of the foregoing filler wire and the rear end of the irradiation range of the following laser beam is preferably in the range satisfying a following expression (5):

$$0 \le L_B \le 3 \times d \;...(5),$$

where d is the diameter of the filler wire.

This is because if the distance $L_B$ between the front end of the filler wire and the rear end of the irradiation range of the following laser beam is less than 0 or exceeds than $3 \times$ d, the shape of the resulting bead becomes unstable. It should be noted that "less than 0" means that the rear end of the irradiation range of the following laser beam is located on the forward side of the front end of the filler wire in the joining direction. More preferably, $L_B$ is in the range of $0.1 \times$ d to $2 \times$ d.

The steel sheet to form the flared joint or the lap joint to which the joining method of the present invention is applied is preferably joined after a region of the steel sheet around the joined portion is coated with flux before being brazed to increase the wettability of the steel sheet with respect to the brazing metal. In addition, for a similar purpose, a flux-cored wire (FCW) is effectively used as the filler wire used for joining for the flared joint or the lap joint of the present invention. It should be noted that a combination of the flux and the steel sheet or the filler wire may be selected as appropriate for securing wettability. For example, a solid wire coated with flux may be used.

The preceding laser beam used in the present invention is preferably a solid-state laser so that the shape of the heated region can be freely controlled. By using a function of the solid-state laser to control the profile of the heated region, it is possible to efficiently heat the side surface of the flared joint or the lap joint with different depths (depths of the opening of the butted portion). Examples of the solid-state laser include a fiber laser in which an optical fiber is used as an amplification medium and a semiconductor laser in which a semiconductor is used as a medium. However, the type of the laser is not limited to a particular type as long as the necessary power is obtained for securing wettability.

The following laser beam is also preferably a solid-state laser for controlling the shape of the heated region. This is because using a function of the solid-state laser to control the profile can control the shape of the resulting bead.

When a steel sheet with a coating layer, which contains zinc as the main component, is used as the steel sheet as the base metal to form the flared joint or the lap joint, it is preferable to perform brazing in a state where the coating layer is melted with the preceding laser beam. Since the molten coating layer has the effect of increasing the wettability between the base metal and a molten wire as with flux, there is an advantage that it is possible to not only stably obtain a bead with an excellent appearance but also stably obtain a joint with a high joining strength by performing brazing in a state where the coating layer is melted even when high-speed joining is performed.

The flared joint or the lap joint produced with the foregoing conditions satisfied has a high strength and excellent appearance since the fed filler wire is fed to a portion deep inside the gap between the butted portion of the base metals and also the wettability between the molten filler metal and the base metals (the steel sheet and the aluminum-based sheet material) is excellent.

Example 1

Experiments of laser brazing were performed for flared joints including an Al alloy and various steel sheets with different steel thicknesses, strengths, and types of zinc-based coating layers illustrated in Table 1, using the joining method of the present invention illustrated in FIG. 1 and a joining method like the one described in Non-Patent Literature 1 illustrated in FIG. 5 in which a filler wire is fed first, and two laser beams follows it. It should be noted that A5052 (an Al-Mg-based alloy) with a steel thickness of 1.2 mm was used as the Al alloy. In addition, a flux-cored wire (FCW) for Fe-Al laser brazing with a diameter of 1.2 mm was used as a filler wire to serve as a brazing material.

Each flared joint was formed such that test piece materials each having a size of 150 mm (shorter side) × 400 mm (longer side) were cut out of the foregoing materials, a portion of each test piece material at a position of 20 mm from an end portion of one of the longer sides was bent at 90° along the longer side so as to obtain an L-shape, the shorter sides of the two L-shaped test piece materials were butted such that the center lines of the steel thicknesses of the longer sides of the two L-shaped test piece materials coincided with each other as illustrated in FIG. 2(a), and then, laser brazing was performed to form a joined portion with a length of 300 mm.

At this time, as the tilt angle D of the filler wire (the angle to the line V that is the center line passing through the groove center of the flared joint and that is perpendicular to the joining direction), six levels including 0°, 10°, 15°, 18°, 19°, and 20° were used in the method of the present invention, while one level of 45° was used in the method of the conventional method. As a laser used for the laser brazing, a semiconductor laser was used for each of a preceding laser beam and a following laser beam, and the power of each of the preceding and following lasers was appropriately set in the range of 2 to 6 kW. The irradiation range of the preceding laser beam was set rectangular that is long in the joining direction, and the length A of the irradiation range in the joining direction was set 3.2 times (constant) the width W of the irradiation range in a direction orthogonal to the joining direction. Meanwhile, the shape of the following laser beam was set circular having an irradiation range of ϕ3 mm under all conditions, and the following laser beam was controlled to irradiate a region immediately after the wire fed position to heat the region. As a shielding gas, an Ar gas was supplied to the wire fed portion at 20 L/min, and was supplied to the following laser beam irradiation portion at 40 L/min. The filler wire was electrically-heated with a current value of 275 A (fixed) so as to be heated to a temperature of $0.5 T_m$ to $T_m$, where $T_m$(K) is the melting point, and the feed rate of the filler wire was set to 17.5 m/min. The other joining conditions are collectively illustrated in Table 2.

[Table 1]

| Steel Sheet Sign | Steel Sheet Thickness (mm) | Tensile Strength (MPa) | Surface Treatment |
|---|---|---|---|
| A | 0.8 | 270 | Not conducted |
| B | 0.8 | 270 | Alloyed hot-dip galvanizing (GA) |
| C | 0.8 | 270 | Hot-dip galvanizing (GI) |
| D | 2.0 | 270 | Alloyed hot-dip galvanizing (GA) |
| E | 1.4 | 590 | Alloyed hot-dip galvanizing (GA) |
| F | 1.4 | 980 | Alloyed hot-dip galvanizing (GA) |

The following evaluation tests were performed on the thus obtained flared joints.

<Evaluation of appearance>

The central portion in the range of 200 mm of the joined portion with a length of 300 mm was visually examined. Then, a flared joint with a smooth bead formed thereon and without joining defects was evaluated as being "excellent (double circle)." A flared joint without joining defects but with observed irregularities, such as surface waviness, of less than 20% of the bead length was evaluated as being "good (circle)." A flared joint without joining defects but with observed irregularities, such as surface waviness, of 20% or more and less than 50% of the bead length was evaluated as being "fair (triangle)." A flared joint with joining defects or with observed irregularities, such as surface waviness, of 50% or more of the bead length was evaluated as being "poor (cross mark)."

<Joining strength of joint>

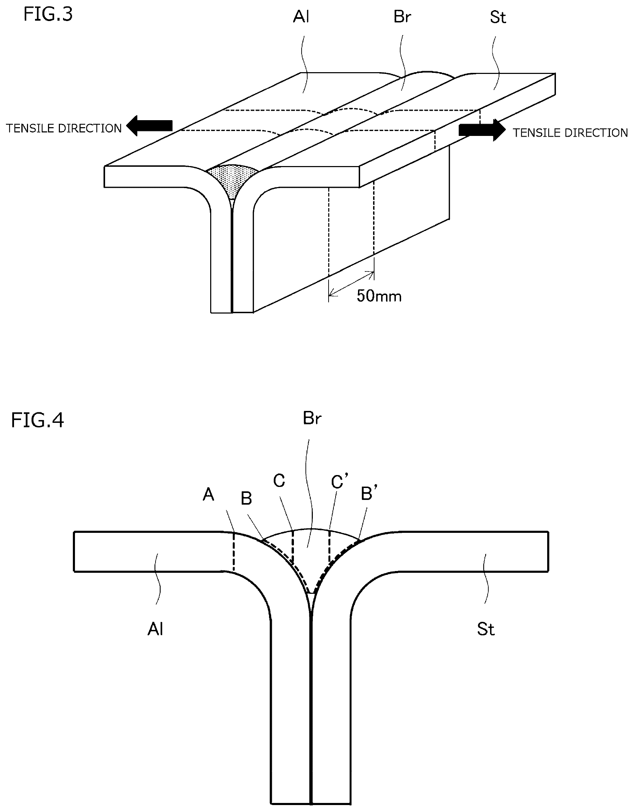

As illustrated in FIG. 3, in each of the thus obtained flared joints, a T-shaped tensile test piece with a width of 50 mm was cut out of the central portion of the joined portion in the lengthwise direction. Then, a tensile test for pulling the test piece in the directions indicated by arrows in FIG. 3 was performed to measure the fracture strength. The fracture strength was divided by the length (50 mm) of the joined portion so that the fracture strength per unit length of the joined portion was determined. It should be noted that the fracture strength was evaluated such that a test piece in which the fracture strength per unit length of the joined portion was 120% or more of the yield strength per unit length of the steel sheet in the joining direction was evaluated as being "excellent (double circle)," a test piece in which the fracture strength was 100% or more and less than 120% was evaluated as being "good (circle)," a test piece in which the fracture strength was greater than 80% or more and less than 100% was evaluated as being "fair (triangle)," and a test piece in which the fracture strength was less than 80% was evaluated as being "poor (cross mark)."

<Fractured portion>

The fractured face was observed after the foregoing tensile test. Then, as illustrated in FIG. 4, a flared joint having a fractured plane located in the base metal portion (the side of the Al alloy) was classified as A; a flared joint having only a peeling surface between the brazed metal and the base metal and in which the peeling surface is located on the side of the Al alloy was classified as B, and in which the peeling surface is located on the side of the steel sheet was classified as B'; and a flared joint having a fractured surface of the brazed metal and also having a peeling surface between the brazed metal and the base metal and in which the fractured surface is located on the side of the Al alloy was classified as C, and in which the fractured surface is located on the side of the steel sheet was classified as C'. It should be noted that, even if the peeling surface between the brazed metal and the base metal lay along the outer surface of the base metal, a fractured surface of the brazed metal was determined to be present as long as the peeling surface was observed as having an alloy phase between the brazed metal and the base metal.

[Table 2]

| No. | Type of Steel Sheet | Wire Fed Position (Corresponding FIG.) | Joining Conditions | | | | | | | | | | | | | | Evaluation of Joint | | | Remarks |
|---|---|---|---|---|---|---|---|---|---|---|---|---|---|---|---|---|---|---|---|---|
| | | | Laser Power (kW) | | Joining Speed (m/min) | Tilt Angle D (°) of Filler Wire | Distance L (mm) Between Rear Ends of Preceding Laser Beam and Wire | Diameter d (mm) of Wire | L/d | Width W (mm) of Irradiation Range of Preceding Laser Beam | Total Sheet Thickness T (mm) | W/T | Length A (mm) of Irradiation Range of Preceding Laser Beam | A/W | Distance L_B (mm) between Following Laser Beam and Front End of Wire | Classification of Fractured Portion | Evaluation of Appearance | Evaluation of Joint Strength | |
| | | | Preceding | Following | | | | | | | | | | | | | | | |
| 1 | A | Center (FIG. 1) | 6.0 | 6.0 | 7.0 | 0 | 0 | 1.2 | 0 | 2.4 | 2.0 | 1.2 | 7.7 | 3.2 | 1.2 | B' | Excellent | Excellent | Invention Example |
| 2 | A | Preceding (FIG. 5) | 6.0 | 6.0 | 7.0 | 45 | 0 | 1.2 | 0 | 2.4 | 2.0 | 1.2 | 7.7 | 3.2 | 1.2 | B | Poor | Poor | Comparative Example |
| 3 | B | Center (FIG. 1) | 6.0 | 6.0 | 7.0 | 0 | 1.2 | 1.2 | 1.0 | 2.4 | 2.0 | 1.2 | 7.7 | 3.2 | 0 | A | Excellent | Excellent | Invention Example |
| 4 | B | Center (FIG. 1) | 6.0 | 6.0 | 7.0 | 15 | 1.2 | 1.2 | 1.0 | 2.4 | 2.0 | 1.2 | 7.7 | 3.2 | 1.2 | C' | Excellent | Excellent | Invention Example |
| 5 | B | Center (FIG. 1) | 6.0 | 6.0 | 7.0 | 18 | 1.2 | 1.2 | 1.0 | 2.4 | 2.0 | 1.2 | 7.7 | 3.2 | 1.2 | C' | Good | Excellent | Invention Example |
| 6 | B | Center (FIG. 1) | 6.0 | 6.0 | 7.0 | 19 | 1.2 | 1.2 | 1.0 | 2.4 | 2.0 | 1.2 | 7.7 | 3.2 | 1.2 | C' | Good | Excellent | Invention Example |
| 7 | B | Center (FIG. 1) | 6.0 | 6.0 | 7.0 | 20 | 1.2 | 1.2 | 1.0 | 2.4 | 2.0 | 1.2 | 7.7 | 3.2 | 1.2 | B | Poor | Poor | Comparative Example |
| 8 | B | Center (FIG. 1) | 6.0 | 6.0 | 7.0 | 0 | 1.2 | 1.2 | 1.0 | 0.9 | 2.0 | 0.45 | 2.9 | 3.2 | 2.4 | C' | Good | Good | Invention Example |
| 9 | B | Center (FIG. 1) | 6.0 | 6.0 | 7.0 | 0 | 1.2 | 1.2 | 1.0 | 6.0 | 2.0 | 3.0 | 19.2 | 3.2 | 1.2 | B' | Excellent | Excellent | Invention Example |
| 10 | B | Center (FIG. 1) | 6.0 | 6.0 | 7.0 | 0 | 1.2 | 1.2 | 1.0 | 6.5 | 2.0 | 3.25 | 20.8 | 3.2 | 3.6 | A | Good | Good | Invention Example |
| 11 | B | Preceding (FIG. 5) | 6.0 | 6.0 | 7.0 | 45 | 0 | 1.2 | 0 | 2.4 | 2.0 | 1.2 | 7.7 | 3.2 | 1.2 | B | Poor | Poor | Comparative Example |
| 12 | B | Center (FIG. 1) | 2.0 | 2.0 | 2.0 | 18 | 1.2 | 1.2 | 1.0 | 2.4 | 2.0 | 1.2 | 7.7 | 3.2 | 1.2 | C' | Excellent | Excellent | Invention Example |

(continued)

| No. | Type of Steel Sheet | Wire Fed Position (Corresponding FIG.) | Joining Conditions | | | | | | | | | | | | | | Evaluation of Joint | | | Remarks |
|---|---|---|---|---|---|---|---|---|---|---|---|---|---|---|---|---|---|---|---|---|
| | | | Laser Power (kW) | | Joining Speed (m/min) | Tilt Angle D (°) of Filler Wire | Distance L (mm) Between Rear Ends of Preceding Laser Beam and Wire | Diameter d (mm) of Wire | L/d | Width W (mm) of Irradiation Range of Preceding Laser Beam | Total Sheet Thickness T (mm) | W/T | Length A (mm) of Irradiation Range of Preceding Laser Beam | A/W | Distance $L_B$ (mm) between Following Laser Beam and Front End of Wire | Classification of Fractured Portion | Evaluation of Appearance | Evaluation of Joint Strength | |
| | | | Preceding | Following | | | | | | | | | | | | | | | |
| 13 | B | Center (FIG. 1) | 3.0 | 3.0 | 3.0 | 10 | 1.2 | 1.2 | 1.0 | 2.4 | 2.0 | 1.2 | 7.7 | 3.2 | 1.2 | C' | Excellent | Excellent | Invention Example |
| 14 | B | Center (FIG. 1) | 4.0 | 4.0 | 4.0 | 15 | 1.2 | 1.2 | 1.0 | 2.4 | 2.0 | 1.2 | 7.7 | 3.2 | 1.2 | C' | Excellent | Excellent | Invention Example |
| 15 | B | Center (FIG. 1) | 4.0 | 4.0 | 4.0 | 15 | 1.2 | 1.2 | 1.0 | 2.4 | 2.0 | 1.2 | 7.7 | 3.2 | 1.2 | C' | Excellent | Excellent | Invention Example |
| 16 | B | Center (FIG. 1) | 4.0 | 6.0 | 4.0 | 15 | 1.2 | 1.2 | 1.0 | 2.4 | 2.0 | 1.2 | 7.7 | 3.2 | 1.8 | C' | Excellent | Excellent | Invention Example |
| 17 | C | Center (FIG. 1) | 6.0 | 6.0 | 7.0 | 0 | 4.8 | 1.2 | 4.0 | 2.4 | 2.0 | 1.2 | 7.7 | 3.2 | 1.2 | B' | Excellent | Excellent | Invention Example |
| 18 | C | Preceding (FIG. 5) | 6.0 | 6.0 | 7.0 | 45 | 0 | 1.2 | 0 | 2.4 | 2.0 | 1.2 | 7.7 | 3.2 | 1.2 | B | Poor | Poor | Comparative Example |
| 19 | D | Center (FIG. 1) | 6.0 | 6.0 | 7.0 | 0 | 1.2 | 1.2 | 1.0 | 3.2 | 3.2 | 1.0 | 10.6 | 3.3 | 1.2 | C' | Excellent | Excellent | Invention Example |
| 20 | D | Preceding (FIG. 5) | 6.0 | 6.0 | 7.0 | 45 | 0 | 1.2 | 0 | 3.2 | 3.2 | 1.0 | 10.6 | 3.3 | 1.2 | C | Poor | Poor | Comparative Example |
| 21 | E | Center (FIG. 1) | 6.0 | 6.0 | 7.0 | 0 | 2.4 | 1.2 | 2.0 | 2.6 | 2.6 | 1.0 | 8.3 | 3.2 | 1.2 | B' | Excellent | Excellent | Invention Example |
| 22 | E | Preceding (FIG. 5) | 6.0 | 6.0 | 7.0 | 45 | 0 | 1.2 | 0 | 2.6 | 2.6 | 1.0 | 8.3 | 3.2 | 1.2 | B | Poor | Poor | Comparative Example |
| 23 | F | Center (FIG. 1) | 6.0 | 6.0 | 7.0 | 0 | 2.4 | 1.2 | 2.0 | 2.6 | 2.6 | 1.0 | 8.3 | 3.2 | 1.2 | B' | Excellent | Excellent | Invention Example |
| 24 | F | Preceding (FIG. 5) | 6.0 | 6.0 | 7.0 | 45 | 0 | 1.2 | 0 | 2.6 | 2.6 | 1.0 | 8.3 | 3.2 | 1.2 | C | Poor | Poor | Comparative Example |

The results of the foregoing evaluation are also illustrated in Table 2. From the results, it was confirmed that a flared joint formed through joining under the conditions that match the present invention is excellent in both the appearance and joining strength even when high-speed joining is performed.

Although a FCW was used as the filler wire in the foregoing experiments, even when a solid wire was used, it was confirmed through experiments performed separately that results similar to the foregoing results were obtained as long as a steel sheet with a surface coated with flux was used.

Example 2

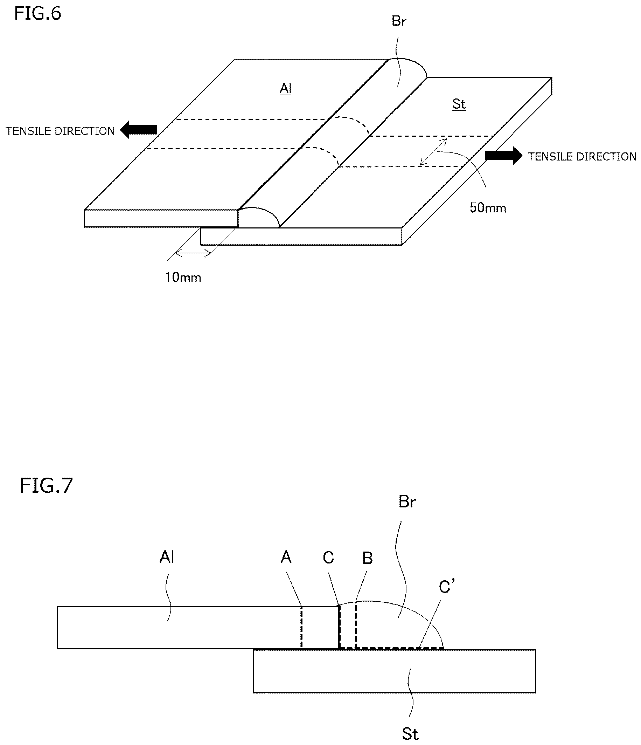

Experiments of laser brazing were performed for lap fillet joints, illustrated in FIG. 6, including an Al alloy steel and various steel sheets with different steel thicknesses, strengths, and types of zinc-based coating layers illustrated in Table 1, using the joining method of the present invention illustrated in FIG. 1 and a joining method like the one described in Non-Patent Literature 1 illustrated in FIG. 5 in which a filler wire is fed first, and two laser beams follows it. It should be noted that A5052 (an Al-Mg-based alloy) with a steel thickness of 1.2 mm was used as the Al alloy steel. In addition, a flux-cored wire (FCW) for Fe-Al laser brazing with a diameter of 1.2 mm was used as a filler wire to serve as a brazing material.

Each lap fillet joint was formed such that test piece materials each having a size of 150 mm (shorter side) × 400 mm (longer side) were cut out of the foregoing materials, end portions of the longer sides of the Al alloy steel and the steel sheet were arranged to overlap each other by 10 mm such that the Al alloy steel was placed on top of the steel sheet as illustrated in FIG. 6, and then, laser brazing was performed to form a joined portion with a length of 300 mm.

At this time, as the tilt angle D of the filler wire (the angle to the line V that is vertical to the lower steel surface of the lap joint), six levels including 0°, 10°, 15°, 18°, 19°, and 20° were prepared in the method of the present invention, while one level of 45° was prepared in the method of the conventional method. As a laser used for the laser brazing, a semiconductor laser was used for each of a preceding laser beam and a following laser beam, and the power of each of the preceding and following lasers was appropriately set in the range of 2 to 6 kW. The irradiation range of the preceding laser beam was set rectangular that is long in the joining direction, and the length A of the irradiation range in the joining direction was set 3.2 times (constant) the width W of the irradiation range in a direction orthogonal to the joining direction. Meanwhile, the shape of the following laser beam was set circular having an irradiation range of $\phi$3 mm under all conditions, and the following laser beam was controlled to irradiate a region immediately after the wire fed position to heat the region. As a shielding gas, an Ar gas was supplied to the wire fed portion at 20 L/min, and was supplied to the following laser beam irradiation portion at 40 L/min. The filler wire was electrically-heated with a current value of 275 A (fixed) so as to be heated to a temperature of 0.5 $T_m$ to $T_m$, where $T_m$(K) is the melting point, and the feed rate of the filler wire was set to 17.5 m/min. The other joining conditions are collectively illustrated in Table 3.

[Table 3]

| No. | Type of Steel Sheet | Wire Fed Position (Corresponding FIG.) | Laser Power (kW) Preceding | Laser Power (kW) Following | Joining Speed (m/min) | Tilt Angle D (°) of Filler Wire | Distance L (mm) Between Rear Ends of Preceding Laser Beam and Wire | Diameter d (mm) of Wire | L/d | Width W (mm) of Irradiation Range of Preceding Laser Beam | Total Sheet Thickness T (mm) | W/T | Length A (mm) of Irradiation Range of Preceding Laser Beam | A/W | Distance $L_B$ (mm) between Following Laser Beam and Front End of Wire | Classification of Fractured Portion | Evaluation of Appearance | Evaluation of Joint Strength | Remarks |
|---|---|---|---|---|---|---|---|---|---|---|---|---|---|---|---|---|---|---|---|
| 1 | A | Center (FIG. 1) | 6.0 | 6.0 | 7.0 | 0 | 0 | 1.2 | 0 | 2.4 | 2.0 | 1.2 | 7.7 | 3.2 | 1.2 | C' | Excellent | Excellent | Invention Example |
| 2 | A | Preceding (FIG. 5) | 6.0 | 6.0 | 7.0 | 45 | 0 | 1.2 | 0 | 2.4 | 2.0 | 1.2 | 7.7 | 3.2 | 1.2 | C' | Poor | Poor | Comparative Example |
| 3 | B | Center (FIG. 1) | 6.0 | 6.0 | 7.0 | 0 | 1.2 | 1.2 | 1.0 | 2.4 | 2.0 | 1.2 | 7.7 | 3.2 | 0 | C' | Excellent | Excellent | Invention Example |
| 4 | B | Center (FIG. 1) | 6.0 | 6.0 | 7.0 | 15 | 1.2 | 1.2 | 1.0 | 2.4 | 2.0 | 1.2 | 7.7 | 3.2 | 1.2 | C' | Excellent | Excellent | Invention Example |
| 5 | B | Center (FIG. 1) | 6.0 | 6.0 | 7.0 | 18 | 1.2 | 1.2 | 1.0 | 2.4 | 2.0 | 1.2 | 7.7 | 3.2 | 1.2 | C' | Excellent | Excellent | Invention Example |
| 6 | B | Center (FIG. 1) | 6.0 | 6.0 | 7.0 | 19 | 1.2 | 1.2 | 1.0 | 2.4 | 2.0 | 1.2 | 7.7 | 3.2 | 1.2 | C' | Good | Good | Invention Example |
| 7 | B | Center (FIG. 1) | 6.0 | 6.0 | 7.0 | 20 | 1.2 | 1.2 | 1.0 | 2.4 | 2.0 | 1.2 | 7.7 | 3.2 | 1.2 | B | Poor | Poor | Comparative Example |
| 8 | B | Center (FIG. 1) | 6.0 | 6.0 | 7.0 | 0 | 1.2 | 1.2 | 1.0 | 0.9 | 2.0 | 0.45 | 2.9 | 3.2 | 2.4 | B | Good | Good | Invention Example |
| 9 | B | Center (FIG. 1) | 6.0 | 6.0 | 7.0 | 0 | 1.2 | 1.2 | 1.0 | 6.0 | 2.0 | 3.0 | 19.2 | 3.2 | 1.2 | C' | Excellent | Excellent | Invention Example |
| 10 | B | Center (FIG. 1) | 6.0 | 6.0 | 7.0 | 0 | 1.2 | 1.2 | 1.0 | 6.5 | 2.0 | 3.25 | 20.8 | 3.2 | 3.6 | A | Good | Good | Invention Example |
| 11 | B | Preceding (FIG. 5) | 6.0 | 6.0 | 7.0 | 45 | 0 | 1.2 | 0 | 2.4 | 2.0 | 1.2 | 7.7 | 3.2 | 1.2 | C' | Poor | Poor | Comparative Example |
| 12 | B | Center (FIG. 1) | 2.0 | 2.0 | 2.0 | 18 | 1.2 | 1.2 | 1.0 | 2.4 | 2.0 | 1.2 | 7.7 | 3.2 | 1.2 | C' | Excellent | Excellent | Invention Example |

(continued)

| No. | Type of Steel Sheet | Wire Fed Position (Corresponding FIG.) | Joining Conditions | | | | | | | | | | | | | | Evaluation of Joint | | | Remarks |
|---|---|---|---|---|---|---|---|---|---|---|---|---|---|---|---|---|---|---|---|---|
| | | | Laser Power (kW) | | Joining Speed (m/min) | Tilt Angle D (°) of Filler Wire | Distance L (mm) Between Rear Ends of Preceding Laser Beam and Wire | Diameter d (mm) of Wire | L/d | Width W (mm) of Irradiation Range of Preceding Laser Beam | Total Sheet Thickness T (mm) | W/T | Length A (mm) of Irradiation Range of Preceding Laser Beam | A/W | Distance $L_B$ (mm) between Following Laser Beam and Front End of Wire | Classification of Fractured Portion | Evaluation of Appearance | Evaluation of Joint Strength | |
| | | | Preceding | Following | | | | | | | | | | | | | | | | |
| 13 | B | Center (FIG. 1) | 3.0 | 3.0 | 3.0 | 10 | 1.2 | 1.2 | 1.0 | 2.4 | 2.0 | 1.2 | 7.7 | 3.2 | 1.2 | C' | Excellent | Excellent | Invention Example |
| 14 | B | Center (FIG. 1) | 4.0 | 4.0 | 4.0 | 15 | 1.2 | 1.2 | 1.0 | 2.4 | 2.0 | 1.2 | 7.7 | 3.2 | 1.2 | C' | Excellent | Excellent | Invention Example |
| 15 | B | Center (FIG. 1) | 4.0 | 4.0 | 4.0 | 15 | 1.2 | 1.2 | 1.0 | 2.4 | 2.0 | 1.2 | 7.7 | 3.2 | 1.2 | C' | Excellent | Excellent | Invention Example |
| 16 | B | Center (FIG. 1) | 4.0 | 6.0 | 4.0 | 15 | 1.2 | 1.2 | 1.0 | 2.4 | 2.0 | 1.2 | 7.7 | 3.2 | 1.8 | C' | Excellent | Excellent | Invention Example |
| 17 | C | Center (FIG. 1) | 6.0 | 6.0 | 7.0 | 0 | 4.8 | 1.2 | 4.0 | 2.4 | 2.0 | 1.2 | 7.7 | 3.2 | 1.2 | C' | Excellent | Excellent | Invention Example |
| 18 | C | Preceding (FIG. 5) | 6.0 | 6.0 | 7.0 | 45 | 0 | 1.2 | 0 | 2.4 | 2.0 | 1.2 | 7.7 | 3.2 | 1.2 | C' | Poor | Poor | Comparative Example |
| 19 | D | Center (FIG. 1) | 6.0 | 6.0 | 7.0 | 0 | 1.2 | 1.2 | 1.0 | 3.2 | 3.2 | 1.0 | 10.6 | 3.3 | 1.2 | C' | Excellent | Excellent | Invention Example |
| 20 | D | Preceding (FIG. 5) | 6.0 | 6.0 | 7.0 | 45 | 0 | 1.2 | 0 | 3.2 | 3.2 | 1.0 | 10.6 | 3.3 | 1.2 | C' | Poor | Poor | Comparative Example |
| 21 | E | Center (FIG. 1) | 6.0 | 6.0 | 7.0 | 0 | 2.4 | 1.2 | 2.0 | 2.6 | 2.6 | 1.0 | 8.3 | 3.2 | 1.2 | C' | Excellent | Excellent | Invention Example |
| 22 | E | Preceding (FIG. 5) | 6.0 | 6.0 | 7.0 | 45 | 0 | 1.2 | 0 | 2.6 | 2.6 | 1.0 | 8.3 | 3.2 | 1.2 | B | Poor | Poor | Comparative Example |
| 23 | F | Center (FIG. 1) | 6.0 | 6.0 | 7.0 | 0 | 2.4 | 1.2 | 2.0 | 2.6 | 2.6 | 1.0 | 8.3 | 3.2 | 1.2 | C' | Excellent | Excellent | Invention Example |
| 24 | F | Preceding (FIG. 5) | 6.0 | 6.0 | 7.0 | 45 | 0 | 1.2 | 0 | 2.6 | 2.6 | 1.0 | 8.3 | 3.2 | 1.2 | C' | Poor | Poor | Comparative Example |

The following evaluation tests were performed on the thus obtained lap fillet joints.

<Evaluation of appearance>

The central portion in the range of 200 mm of the joined portion with a length of 300 mm was visually examined. Then, a lap fillet joint with a smooth bead formed thereon and without joining defects was evaluated as being "excellent (double circle)." A lap fillet joint without joining defects but with observed irregularities, such as surface waviness, of less than 20% of the bead length was evaluated as being "good (circle)." A lap fillet joint without joining defects but with observed irregularities, such as surface waviness, of 20% or more and less than 50% of the bead length was evaluated as being "fair (triangle)." A lap fillet joint with joining defects or with observed irregularities, such as surface waviness, of 50% or more of the bead length was evaluated as being "poor (cross mark)."

<Joining strength of joint>

As illustrated in FIG. 6, in each of the thus obtained lap joints, a tensile test piece with a width of 50 mm was cut out of the central portion of the joined portion in the lengthwise direction. Then, a tensile test for pulling the test piece in the directions indicated by arrows in FIG. 6 was performed to measure the fracture strength. The fracture strength was divided by the length (50 mm) of the joined portion so that the fracture strength per unit length of the joined portion was determined. It should be noted that the fracture strength was evaluated such that a test piece in which the fracture strength per unit length of the joined portion was 120% or more of the yield strength per unit length of the steel sheet in the joining direction was evaluated as being "excellent (double circle)," a test piece in which the fracture strength was 100% or more and less than 120% was evaluated as being "good (circle)," a test piece in which the fracture strength was 80% or more and less than 100% was evaluated as being "fair (triangle)," and a test piece in which the fracture strength was less than 80% was evaluated as being "poor (cross mark)."

<Fractured portion>

The fractured surface was observed after the foregoing tensile test. Then, as illustrated in FIG. 7, a lap joint having a fractured surface located in the base metal portion (the side of the Al alloy) was classified as A; a lap joint having a fractured portion inside the brazed metal was classified as B; and a lap joint having a peeling surface between the brazed metal and the base metal and in which the peeling surface is located on the side of the Al alloy was classified as C, and in which the peeling surface is located on the side of the steel sheet was classified as C'. It should be noted that, even if the peeling surface between the brazed metal and the base metal lay along the outer surface of the base metal, a fractured surface of the brazed metal was determined to be present as long as the peeling surface was observed as having an alloy phase between the brazed metal and the base metal.

The results of the foregoing evaluation are also illustrated in Table 3. From the results, it was confirmed that a lap joint formed through joining under the conditions that match the present invention is excellent in both the appearance and joining strength even when high-speed joining is performed.

Although a FCW was used as the filler wire in the foregoing experiments, even when a solid wire was used, it was confirmed through experiments performed separately that results similar to the foregoing results were obtained as long as a steel sheet with a surface coated with flux was used.

Industrial Applicability

The technology of the present invention can be widely applied not only to the brazing of dissimilar materials, such as an Al alloy steel and a steel sheet, but also to the field of an additive manufacturing technology in which an electrically-heated filler wire is irradiated with a laser beam to melt the filler wire, and the molten filler wire is caused to stick to and deposit on a predetermined position of a material surface, for example. Specifically, it is considered that the present invention may be applied to a technology for increasing the rigidity of a member by causing a molten metal to locally stick to the member and thus increasing the thickness of the member, and a technology like a 3D printer that obtains a three-dimensional object by sequentially depositing a molten metal.

Reference Signs List

1 flared joint
2 preceding laser beam

2' irradiation range of preceding laser beam
3 following laser beam
4 wire
3' irradiation range of following laser beam
$C_L$ center line passing through groove center
V line that is center line passing through groove center of flared joint and that is perpendicular to joining direction, or line that is perpendicular to lower steel surface of lap joint
D tilt angle of filler wire
$\theta$ feed angle of filler wire
A length of irradiation range of preceding laser beam in joining direction
W width of irradiation range of preceding laser beam
L distance between rear end of irradiation range of preceding laser beam and rear end of filler wire
$L_B$ distance between rear end of irradiation range of following laser beam and front end of filler wire
d diameter of filler wire
St steel sheet
Al Al alloy steel
Br brazed portion

**Claims**

1. A laser brazing method for a flared joint comprising a steel sheet and an aluminum-based sheet material, wherein

   a preceding laser beam is irradiated ahead of a joining position of the steel sheet and the aluminum-based sheet material in a joining direction to preheat a position to be joined;
   a following laser beam is irradiated behind the filler wire so that the filler wire is melted to perform brazing, **characterized in that**
   an electrically-heated aluminum-based filler wire is fed to the joining position; and wherein
   the filler wire is fed with a tilt in a range of $0° \leq D \leq 19°$ to a front side or a rear side in the joining direction with respect to a line that is a center line passing through a groove center of the flared joint and that is perpendicular to the joining direction.

2. A laser brazing method for a lap joint including a steel sheet and an aluminum-based sheet material, **characterized in that**:

   a preceding laser beam is irradiated ahead of a joining position of the steel sheet and the aluminum-based sheet material in a joining direction to preheat a position to be joined;
   an electrically-heated aluminum-based filler wire is fed to the joining position; and
   a following laser beam is irradiated behind the filler wire so that the filler wire is melted to perform brazing, wherein
   the filler wire is fed with a tilt in the range of $0° \leq D \leq 19°$ to a front side or a rear side in the joining direction with respect to a line that is perpendicular to a lower steel surface of the lap joint.

3. The laser brazing method according to claim 1 or 2, wherein

   a distance L between a rear end of an irradiation range of the preceding laser beam and a rear end of the filler wire is in a range satisfying a following expression (1):

$$0 \leq L \leq 4 \times d \,...(1),$$

   where d is a diameter of the filler wire.

4. The laser brazing method according to any one of claims 1 to 3, wherein

   a width W of an irradiation range of the preceding laser beam in a direction orthogonal to the joining direction is in the range satisfying a following expression (2):

$$0.5 \times T \leq W \leq 3 \times T \,...(2),$$

where T is a sum of steel thicknesses of the steel sheet and the aluminum-based sheet material.

5. The laser brazing method according to any one of claims 1 to 4, wherein

an irradiation range of the preceding laser beam is rectangular, and
a length A of the irradiation range of the preceding laser beam in the joining direction is in the range satisfying a following expression (3):

$$W \leq A \leq 10 \times W \ ...(3),$$

where W is a width of the irradiation range.

6. The laser brazing method according to any one of claims 1 to 5, wherein
the steel sheet is a steel sheet coated with flux.

7. The laser brazing method according to any one of claims 1 to 6, wherein
the filler wire is a flux-cored wire.

8. The laser brazing method according to any one of claims 1 to 7, wherein
the preceding laser beam is a solid-state laser.

9. The laser brazing method according to any one of claims 1 to 8, wherein

the steel sheet has a coating layer containing zinc as a main component, and
the brazing is performed in a state where the coating layer is melted with the preceding laser beam.

10. The laser brazing method according to any one of claims 1 to 9, wherein

a temperature $T_f$(K) of the electrically-heated filler wire is in the range satisfying a following expression (4):

$$0.5 \times T_m \leq T_f \leq T_m \ ...(4),$$

where $T_m$(K) is a melting point of the filler wire.

11. The laser brazing method according to any one of claims 1 to 10, wherein

a distance $L_B$ between a front end of the filler wire and a rear end of an irradiation range of the following laser beam is in the range satisfying a following expression (5):

$$0 \leq L_B \leq 3 \times d \ ...(5),$$

where d is a diameter of the filler wire.

**Patentansprüche**

1. Laserlötverbindungsverfahren für einen Bördelstoß, umfassend ein Stahlblech und ein Blechmaterial auf Aluminiumbasis, wobei

ein vorlaufender Laserstrahl vor einer Fügeposition des Stahlblechs und des Blechmaterials auf Aluminiumbasis in einer Fügerichtung bestrahlt wird, um eine zu fügende Stelle vorzuwärmen;
ein nachlaufender Laserstrahl hinter dem Zusatzdraht bestrahlt wird, sodass der Zusatzdraht geschmolzen wird, um Löten durchzuführen,
**dadurch gekennzeichnet, dass**
ein elektrisch beheizter Zusatzdraht auf Aluminiumbasis der Fügeposition zugeführt wird; und wobei
der Zusatzdraht mit einer Neigung in einem Bereich von $0° \leq 0 \leq 19°$ zu einer Vorderseite oder einer Rückseite in der Fügerichtung in Bezug auf eine Linie zugeführt wird, die eine Mittellinie ist, die durch eine Fugenmitte des Bördelstoßes verläuft und die senkrecht zur Fügerichtung ist.

2. Laserlötverbindungsverfahren für einen Überlappstoß einschließlich eines Stahlblechs und eines Blechmaterials auf Aluminiumbasis, **dadurch gekennzeichnet, dass**:

ein vorlaufender Laserstrahl vor einer Fügeposition des Stahlblechs und des Blechmaterials auf Aluminiumbasis in einer Fügerichtung bestrahlt wird, um eine zu fügende Stelle vorzuwärmen;
ein elektrisch beheizter Zusatzdraht auf Aluminiumbasis der Fügeposition zugeführt wird; und
ein nachlaufender Laserstrahl hinter dem Zusatzdraht bestrahlt wird, sodass der Zusatzdraht geschmolzen wird, um Löten durchzuführen, wobei
der Zusatzdraht mit einer Neigung in dem Bereich von $0° \leq 0 \leq 19°$ zu einer Vorderseite oder einer Rückseite in der Fügerichtung in Bezug auf eine Linie zugeführt wird, die senkrecht zu einer unteren Stahloberfläche des Überlappstoßes ist.

3. Laserlötverbindungsverfahren nach Anspruch 1 oder 2, wobei

ein Abstand L zwischen einem hinteren Ende eines Bestrahlungsbereichs des vorlaufenden Laserstrahls und einem hinteren Ende des Zusatzdrahts in einem Bereich liegt, der den folgenden Ausdruck (1) erfüllt:

$$0 \leq L \leq 4 \times d \ldots(1),$$

wobei d ein Durchmesser des Zusatzdrahts ist.

4. Laserlötverbindungsverfahren nach einem der Ansprüche 1 bis 3, wobei

eine Breite W eines Bestrahlungsbereichs des vorlaufenden Laserstrahls in einer Richtung, die orthogonal zur Fügerichtung ist, in dem Bereich liegt, der den folgenden Ausdruck (2) erfüllt:

$$0,5 \times T \leq W \leq 3 \times T \ldots(2),$$

wobei T eine Summe von Blechdicken des Stahlblechs und des Blechmaterials auf Aluminiumbasis ist.

5. Laserlötverbindungsverfahren nach einem der Ansprüche 1 bis 4, wobei

ein Bestrahlungsbereich des vorlaufenden Laserstrahls rechteckig ist, und
eine Länge A des Bestrahlungsbereichs des vorlaufenden Laserstrahls in der Fügerichtung in dem Bereich liegt, der den folgenden Ausdruck (3) erfüllt:

$$W \leq A \leq 10 \times W \ldots(3),$$

wobei W eine Breite des Bestrahlungsbereichs ist.

6. Laserlötverbindungsverfahren nach einem der Ansprüche 1 bis 5, wobei das Stahlblech ein mit Flussmittel beschichtetes Stahlblech ist.

7. Laserlötverbindungsverfahren nach einem der Ansprüche 1 bis 6, wobei der Zusatzdraht ein Flussmittelkerndraht ist.

8. Laserlötverbindungsverfahren nach einem der Ansprüche 1 bis 7, wobei der vorlaufende Laserstrahl ein Festkörperlaser ist.

9. Laserlötverbindungsverfahren nach einem der Ansprüche 1 bis 8, wobei

das Stahlblech eine Beschichtungsschicht, die Zink als Hauptbestandteil enthält, aufweist, und
das Löten in einem Zustand durchgeführt wird, in dem die Beschichtungsschicht mit dem vorlaufenden Laserstrahl geschmolzen wird.

10. Laserlötverbindungsverfahren nach einem der Ansprüche 1 bis 9, wobei

eine Temperatur $T_f$(K) des elektrisch beheizten Zusatzdrahts in dem Bereich liegt, der den folgenden Ausdruck (4) erfüllt:

$$0{,}5 \times T_m \leq T_f \leq T_m \ldots(4),$$

wobei $T_m$(K) ein Schmelzpunkt des Zusatzdrahts ist.

11. Laserlötverbindungsverfahren nach einem der Ansprüche 1 bis 10, wobei

ein Abstand $L_B$ zwischen einem vorderen Ende des Zusatzdrahts und einem hinteren Ende eines Bestrahlungsbereichs des nachlaufenden Laserstrahls in dem Bereich liegt, der den folgenden Ausdruck (5) erfüllt:

$$0 \leq L_B \leq 3 \times d \ldots(5),$$

wobei d ein Durchmesser des Zusatzdrahts ist.

**Revendications**

1. Procédé de brasage au laser pour un joint évasé comprenant une tôle d'acier et un matériau en tôle à base d'aluminium, dans lequel

un faisceau laser précédent est irradié devant une position d'assemblage de la tôle d'acier et du matériau en tôle à base d'aluminium dans une direction d'assemblage pour préchauffer une position devant être assemblée ;
un faisceau laser suivant est irradié derrière le fil d'apport de telle sorte que le fil d'apport est fondu pour mettre en œuvre le brasage,
**caractérisé en ce que**
un fil d'apport à base d'aluminium chauffé électriquement est apporté jusqu'à la position d'assemblage ; et dans lequel
le fil d'apport est apporté avec une inclinaison dans une plage de $0° \leq D \leq 19°$ vers un côté avant ou un côté arrière dans la direction d'assemblage par rapport à une ligne qui est une ligne centrale passant par un centre de rainure du joint évasé et qui est perpendiculaire à la direction d'assemblage.

2. Procédé de brasage au laser pour un joint à recouvrement incluant une tôle d'acier et un matériau en tôle à base d'aluminium, **caractérisé en ce que** :

un faisceau laser précédent est irradié devant une position d'assemblage de la tôle d'acier et du matériau en tôle à base d'aluminium dans une direction d'assemblage pour préchauffer une position devant être assemblée ;
un fil d'apport à base d'aluminium chauffé électriquement est apporté jusqu'à la position d'assemblage ; et
un faisceau laser suivant est irradié derrière le fil d'apport de telle sorte que le fil d'apport est fondu pour mettre en œuvre le brasage, dans lequel
le fil d'apport est apporté avec une inclinaison dans la plage de $0° \leq D \leq 19°$ vers un côté avant ou un côté arrière dans la direction d'assemblage par rapport à une ligne qui est perpendiculaire à une surface d'acier inférieure du joint à recouvrement.

3. Procédé de brasage au laser selon la revendication 1 ou la revendication 2, dans lequel

une distance L entre une extrémité arrière d'une plage d'irradiation du faisceau laser précédent et une extrémité arrière du fil d'apport est dans une plage satisfaisant une expression (1) suivante :

$$0 \leq L \leq 4 \times d \ldots(1),$$

où d est un diamètre du fil d'apport.

4. Procédé de brasage au laser selon l'une quelconque des revendications 1 à 3, dans lequel

une largeur W d'une plage d'irradiation du faisceau laser précédent dans une direction orthogonale à la direction d'assemblage est dans la plage satisfaisant une expression (2) suivante :

$$0{,}5 \times T \le W \le 3 \times T \ ...(2),$$

où T est une somme d'épaisseurs d'acier de la tôle d'acier et du matériau en tôle à base d'aluminium.

5. Procédé de brasage au laser selon l'une quelconque des revendications 1 à 4, dans lequel

une zone d'irradiation du faisceau laser précédent est rectangulaire, et
une longueur A de la plage d'irradiation du faisceau laser précédent dans la direction d'assemblage est dans la plage satisfaisant une expression (3) suivante :

$$W \le A \le 10 \times W \ ...(3),$$

où W est une largeur de la plage d'irradiation.

6. Procédé de brasage au laser selon l'une quelconque des revendications 1 à 5, dans lequel
la tôle d'acier est une tôle d'acier revêtue de flux.

7. Procédé de brasage au laser selon l'une quelconque des revendications 1 à 6, dans lequel
le fil d'apport est un fil d'apport fourré au flux.

8. Procédé de brasage au laser selon l'une quelconque des revendications 1 à 7, dans lequel
le faisceau laser précédent est un laser à l'état solide.

9. Procédé de brasage au laser selon l'une quelconque des revendications 1 à 8, dans lequel

la tôle d'acier présente une couche de revêtement contenant du zinc comme composant principal, et
le brasage est mis en œuvre dans un état où la couche de revêtement est fondue avec le faisceau laser précédent.

10. Procédé de brasage au laser selon l'une quelconque des revendications 1 à 9, dans lequel

une température $T_f$(K) du fil d'apport chauffé électriquement est dans la plage satisfaisant une expression (4) suivante :

$$0{,}5 \times T_m \le T_f \le T_m ...(4),$$

où $T_m$(K) est un point de fusion du fil d'apport.

11. Procédé de brasage au laser selon l'une quelconque des revendications 1 à 10, dans lequel

une distance $L_B$ entre une extrémité avant du fil d'apport et une extrémité arrière d'une plage d'irradiation du faisceau laser suivant est dans la plage satisfaisant une expression (5) suivante :

$$0 \le L_B \le 3 \times d ...(5),$$

où d est un diamètre du fil d'apport.

FIG.1（a）

V

D

3

2

4

1

JOINING DIRECTION →

FIG.1（b）

1

3′ 4 2′

JOINING DIRECTION →

W

d

L

A

$L_B$

FIG.2（a）

FIG.2（b）

FIG.2（c）

FIG.2（d）

FIG.3

TENSILE DIRECTION

TENSILE DIRECTION

50mm

FIG.4

Br

A    B    C    C'    B'

Al                St

FIG. 5(a)

JOINING DIRECTION →

FIG. 5(b)

JOINING DIRECTION →

FIG.6

Br

Al

St

TENSILE DIRECTION

TENSILE DIRECTION

50mm

10mm

FIG.7

Al

A    C    B

Br

C'

St

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5855470 B
- CN 110899882 A
- JP 2003225784 A
- JP 2007075872 A
- JP 2013014673 A

**Non-patent literature cited in the description**

- **TAKANO** ; **YAMAMOTO** ; **SHINOZAKI** ; **OKITA** ; **SAWANISHI** ; **MATSUDA**. High-speed Hot-wire Laser Brazing for Dissimilar Flare Joint of Steel / Aluminum Alloy-Development of Hot-wire Laser Brazing Technology for Steel / Aluminum Alloy Dissimilar Joint (6th Report). *Preprints of the National Meeting of the Japan Welding Society*, September 2020, vol. 107, G-1-4